# EUROPÄISCHE PATENTSCHRIFT

(11) **EP 0 494 379 B1**
(45) Veröffentlichungstag und Bekanntmachung des Hinweises auf die Patenterteilung: **16.03.1994**
(21) Anmeldenummer: 91121026.8
(22) Anmeldetag: 07.12.1991
(51) Int. Cl.: B25D 16/00, B25F 5/00, F16D 43/24

(54) **Handwerkzeugmaschine mit Sicherheitskupplung**
Handtool with safety clutch
Outil à main avec embrayage de securité

(30) Priorität: 05.01.1991 DE 4100185
(43) Veröffentlichungstag der Anmeldung: 15.07.1992
(73) Patentinhaber: ROBERT BOSCH GMBH, 70442 Stuttgart (DE)
(72) Erfinder: Blöchle, Hans, Dipl.-Ing., W-7000 Stuttgart 40 (DE)

(56) Entgegenhaltungen:
- EP-A- 0 012 815
- EP-A- 0 326 783
- DE-A- 3 041 099

## Beschreibung

Die Erfindung geht aus von einer Handwerkzeugmaschine nach dem Oberbegriff des Anspruchs 1. Aus der DE-C-30 41 099 ist eine derartig ausgebildete Maschine zum Bohren oder Schlagbohren gezeigt, deren als beweglich gelagerte Masse ausgebildetes Schaltglied beim Klemmen oder Blockieren des Bohrers aus ihrer Ruhelage ausgelenkt wird. Die ausgelenkte Masse betätigt einen elektrischen Schalter, der seinerseits die Stromzufuhr zum Antriebsmotor der Maschine unterbricht. Wegen der geringen Schaltkräfte der als Trägheitskörper wirkenden Masse kommen als Schalter nur berührungslose Näherungsschalter in Frage, die relativ teuer sind. Die bekannte Einrichtung führt auch lediglich zur Abschaltung der Antriebsquelle, nicht aber zur mechanischen Entkuppelung der Antriebsquelle vom Werkzeug, so daß aufgrund des nachlaufenden Motors und der hohen Schwungmassen sich das Gehäuse bei blockierendem Werkzeug noch relativ weit um die Werkzeugachse weiterdreht.

### Vorteile der Erfindung

Die erfindungsgemäße Handwerkzeugmaschine mit den kennzeichnenden Merkmalen des Anspruchs 1 hat demgegenüber den Vorteil, daß die das Gehäuse beschleunigende Antriebsquelle bei blockierendem Werkzeug mit einfachen und zuverlässigen mechanischen Mitteln von dem festsitzenden Werkzeug getrennt wird. Elektrische Schaltmittel werden dazu nicht benötigt. Die Erfindung hat den weiteren Vorteil, daß die mechanische Sicherheitskupplung im Gegensatz zu Rutschkupplungen, die ein festes Auslösemoment aufweisen, nur dann ausgelöst wird, wenn der Benutzer bei klemmendem Bohrer das Gehäuse des Bohrhammers nicht in normaler Betriebslage zu halten vermag, das Gehäuse sich also plötzlich verdreht. Nach dem Abschalten der Maschine schließt sich die Sicherheitskupplung selbsttätig wieder.

Durch die in den unabhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, wenn der Trägheitskörper auf einen relativ zu der Antriebswelle drehbaren Ring einwirkt, der mit einer der Kupplungshälften der Sicherheitskupplung verbunden ist. Dieser Ring ist vorzugsweise über ein Linksgewinde mit der Antriebswelle verbunden, so daß er sich bei einer Relativgeschwindigkeit zur Antriebswelle axial bewegt. Die Relativgeschwindigkeit wird dadurch erzeugt, daß die im Blockierfall in Bewegung versetzte Trägheitsmassse den Ring insbesondere durch Berührung abbremst. Besonders vorteilhaft ist es auch, wenn das Gewinde zwischen Ring und Antriebswelle am Ende leer ausläuft, so daß der Ring bei gelöster Kupplung frei durchdrehen kann. Um die Kupplung nach dem Blockierfall wieder einrasten zu lassen, ist der Ring mit einer Druckfeder beaufschlagt, die nach Abschalten des Antriebsmotors ein Schließen der Sicherheitskupplung hervorruft. Um ein unbeabsichtigtes Auslösen der Kupplung zu verhindern, ist der Trägheitskörper mit einer geringen Haltekraft oder einem Rastmoment, das etwa dem durch sein Eigengewicht hervorgerufenen Drehmoment entspricht, in seiner Ruhelage gehalten. Besonders vorteilhaft ist es weiter am Trägheitskörper und an dem Ring Flächen hoher Reibung, insbesondere mit Zähnen anzubringen, um eine möglichst rasche Abbremsung des Rings zu bewirken. Damit der in den Ring eingreifende Trägheitskörper die Axialbewegung des Rings nicht behindert, ist dieser vorteilhaft in Axialrichtung des Ringes verschieb- oder kippbar.

### Zeichnung

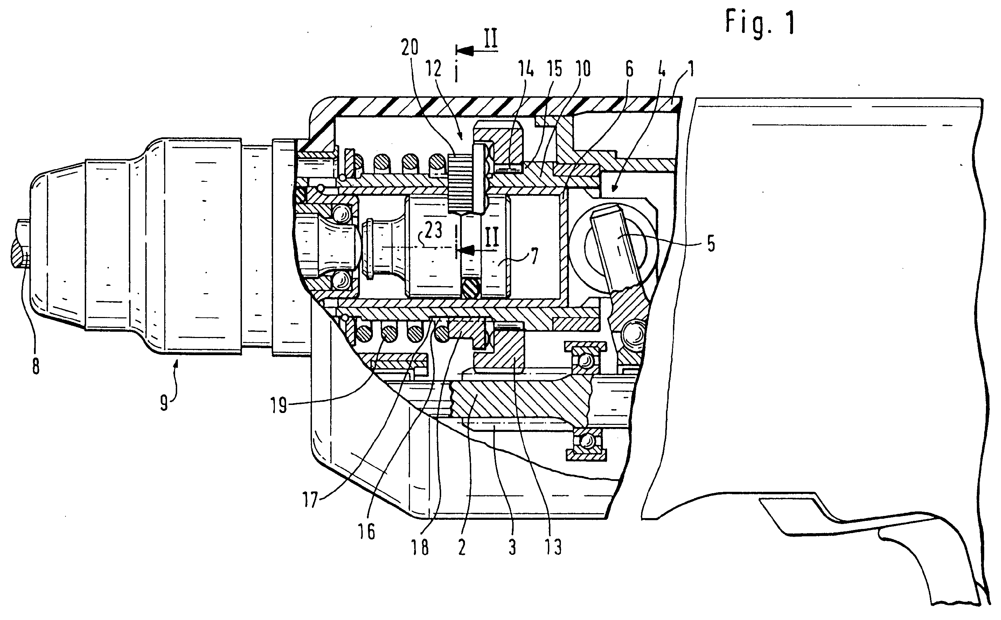

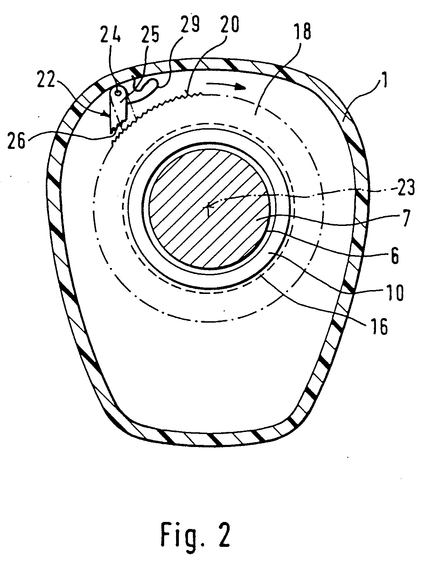

Ein Ausführungsbeispiel der Erfindung ist in der Zeichnung dargestellt und in der nachfolgenden Beschreibung näher erläutert. Figur 1 zeigt einen Teillängsschnitt durch einen Bohrhammer, Figur 2 zeigt einen vereinfachten Querschnitt gemäß Linie II-II in Figur 1.

### Beschreibung des Ausführungsbeispiels

Eine als Bohrhammer ausgebildete Handwerkzeugmaschine weist ein Gehäuse 1 auf, in dem ein nicht gezeigter elektrischer Motor, vorzugsweise für Rechts- und Linkslauf, untergebracht ist. Die Drehbewegung des Motors wird auf eine Zwischenwelle 2 übertragen, die eine Außenverzahnung 3 aufweist. Weiter ist auf der Zwischenwelle 2 zum Antrieb eines Schlagwerks 4 mit Taumelscheibe eine Taumelfinger 5 angeordnet. Der Taumelfinger 5 treibt einen Hohlkolben 6 an, in dem ein Schläger 7 axiale Schläge auf ein Werkzeug 8 ausübt. Das Werkzeug 8 ist in einer Werkzeugaufnahme 9 gehalten, die von einer hohlen Spindel 10 im Bohrbetrieb rechtsdrehend angetrieben ist. Innerhalb der Spindel 10 ist der Hohlkolben 6 geführt.

Die Spindel 10 steht über eine Sicherheitskupplung 12 in Getriebeverbindung mit der Zwischenwelle 2. Die Verbindung wird hergestellt über eine Hälfte der Sicherheitskupplung, die von einem Zahnrad 13 gebildet wird. Das Zahnrad 13 ist auf der Spindel 10 mittels eines Nadellagers 14 frei drehbar gelagert und axial unverschieblich mit der Spindel verbunden; das Zahnrad 13 liegt motorseitig an einem Bund 15 der Spindel an. Im Anschluß an das Nadellager 14 weist die Spindel 10 zum Werkzeughalter 9 hin gewandt ein Linksgewinde 16 auf. Das Gewinde 16 ist vorzugsweise mehrgängig und läuft an seinem der Kupplungshälfte 13 abgewandten Ende 17 leer aus. Mit dem Linksgewinde 16 steht ein Ring 18 in Eingriff, der die zweite Kupplungshälfte der Sicherheitskupplung 12 verkörpert. Der Ring 18 und das Zahnrad 13 weisen einander zugewandt form- oder reibschlüssige Kupplungsbeläge, zum Beispiel Klauen oder Belege mit hohem Reibungskoeffizienten auf. Ebenso kann die Kupplung als Konsuskupplung ausgebildet sein. Der Ring 18 wird durch eine relativ schwache Druckfeder 19 gegen das Zahnrad 13 gepreßt. Eine zusätzliche Schließkraft wird im Betrieb des Hammers bei rechtsherum angetriebener Spindel durch das Linksgewinde zwischen Spindel und Ring 18 auf die Sicherheitskupplung 12 ausgeübt.

An seinem Umfang weist der Ring 18 eine Reibfläche 20 mit hohem Reibungskoeffizienten auf. Die Reibfläche 20 kann auch geriffelt oder gezahnt sein.

Wie aus Figur 2 ersichtlich ist, ist radial außerhalb des Rings 18 am Gehäuse 1 ein Schaltglied 22 einends aufgehängt. Dieses ist um eine parallel zur Spindelachse 23 ausgerichtete Lagerachse 24 drehbar und in Richtung auf den Werkzeughalter 9 kippbar aufgehängt. Das Schaltglied 22 hängt frei an der Lagerachse 24, so daß ein mit dem Schaltglied 22 einstückiges Massestück 25 innerhalb einer die Lagerachse 24 schneidenden fiktiven Zylindermantelfläche um die Spindelachse 23 pendeln kann. An seinem der Lagerachse 24 abgewandten Ende hat das Schaltglied 22 eine Reibfläche 26, die mit der Reibfläche 20 des Rings 18 zusammenwirken kann.

Im Normalbetrieb befindet sich das Schaltglied 22 in der in Figur 2 dargestellten Ruhestellung. Seine Reibfläche 26 befindet sich dabei in geringem Abstand zu der Reibfläche 20 des Rings 18, ohne diese jedoch zu berühren. Die Spindel 10 beziehungsweise der Ring 18 drehen sich in Pfeilrichtung rechts herum.

Die Auslösung der Sicherheitskupplung 12 erfolgt nach dem Trägheitsprinzip. Bei blockierendem Werkzeug 8 und weiter laufendem Motor dreht sich das Gehäuse 1 des Bohrhammers um die stillstehende Spindelachse 23 nach rechts. Das Schaltglied 22 verharrt aufgrund seiner Trägheit in seiner senkrecht nach unten hängenden Lage. Durch die Drehung des Gehäuses 1 bewegt sich der Ring 18 gleichsam auf das Schaltglied 22 zu, und die in der Zeichnung mit Zähnen versehenen Reibflächen 20 und 26 kommen in Kontakt, das heißt das Schaltglied 22 greift direkt in die Sicherheitskupplung 12 ein. Das Schaltglied 22 befindet sich nun in der in Figur 2 gestrichelt gezeichneten Lage zum Ring 18. Diese Stellung ist nach ca. 20 Grad Drehwinkel des Gehäuses 1 erreicht. Sobald die Reibflächen 26 und 20 miteinander in Kontakt kommen, wird der mit der Spindel 10 sich mitdrehende Ring 18 abgebremst. Dabei verkeilen sich die Reibflächen 20 und 26 ineinander, sodaß der Ring 18 zum Stillstand kommt. Bei weiter drehender Spindel 10 bewegt sich der Ring 18 entlang des Linksgewindes 16 von der Kupplungshälfte 13 weg. Dabei löst sich die Sicherheitskupplung 12 sehr schnell, weil die Spindel 10 mit hoher Drehzahl angetrieben ist. Der bei blockiertem Werkzeug 8 auf das Gehäuse 1 wirkende Drehantrieb wird schlagartig unterbrochen, bevor der Bohrhammer der Hand der Bedienungsperson entgleiten kann.

Der Antriebsmotor läuft zunächst noch weiter. Um bei noch weiter drehender Spindel 10 eine Beschädigung des Auslösemechanismuses der Sicherheitskupplung 12 zu vermeiden, läuft das Linksgewinde 16 an seinem der Kupplung 12 fernliegenden Ende 17 offen aus, so daß dort der Ring 18 gegenüber der Spindel 10 frei drehbar ist. Das Schaltglied 22 bleibt während des Auslösens der Kupplung 12 bis zum Abschalten des Motors in ständigem Eingriff bzw. Kontakt mit dem Ring 18. Dazu ist das Schaltglied 22 an seiner Lagerachse 24 zumindest einseitig kippbar aufgehängt, so daß das Schaltglied mit der Reibfläche 20 des Rings 18 in Kontakt bleiben kann, ohne dessen Axialverschiebung zu behindern. Beispielsweise kann ein die Lagerachse 24 verkörpernder Stift abgeflacht oder die zugehörige Öse in dem Schaltglied 22 als Langloch ausgebildet sein.

Nach Abschalten des Antriebsmotors durch die Bedienungsperson löst sich die Reibfläche 26 des Schaltgliedes 22 von der Oberfläche 20 und der Ring 18 wird durch die Feder 19 wieder in seine in Figur 1 gezeigte Ursprungslage zurückgedrängt. Dabei schließt sich die Sicherheitskupplung 12. Sollte die Feder 19 im Einzelfall für das Rückführen des Rings 18 nicht ausreichen oder das Schaltglied 22 sich nicht von dem Ring 18 lösen, so kann dies auch durch kurzes Antippen des Linkslaufs der Maschine erreicht werden.

Um das Schaltglied auch bei Querlage der Maschine also um 90 Grad nach rechts gedrehtem Gehäuse ohne Ansprechen der Sicherheitskupplung benutzen zu können, ist das Schaltglied 22 durch ein Halteglied 29 in seiner Ruhelage gehalten. Dieses übt ein schwaches Rastmoment oder eine Haltekraft aus, die etwa dem von der Gewichtskraft des Schaltgliedes 22 ausgelösten Drehmoment entspricht. Das Halteglied 29 kann von seitlich des Schaltgliedes am Gehäuse 1 angebrachten Nocken gebildet sein oder auch von einer schwachen Feder 29, die das Schaltglied 22 in seiner Ruhelage zurückhält. Das Halteglied 29 schützt vor Fehlauslösungen und behindert andererseits wegen seiner geringen Haltekraft die zuverlässige Auslösung der Kupplung im Blockierfall nicht.

Die Erfindung beschränkt sich nicht auf die gezeigten Ausführungsbeispiele. So kann das Schaltglied auch eine andere Form aufweisen oder an anderer Stelle im Gehäuse aufgehängt sein. Wichtig ist, daß sich ein Massestück des Schaltgliedes in Betriebslage der Maschine innerhalb der die Lagerachse des Schaltglieds schneidenden fiktiven Zylindermantelfläche um die Spindelachse befindet, damit die bei plötzlicher Drehung entstehenden Trägheitskräfte ausgenutzt werden können. Zur Auslösung der Sicherheitskupplung reicht bereits ein Abbremsen der mit dem Linksgewinde versehenen Kupplungshälfte gegenüber der drehenden Spindel. Dies kann über Reibung oder auch durch Formschluß zwischen dem Schaltglied und der Kupplungshälfte erzielt werden.

## Patentansprüche

1. Handwerkzeugmaschine, insbesondere Bohrhammer, mit einem Gehäuse (1) und einer über eine Spindel (10) drehend angetriebenen Werkzeugaufnahme (9) sowie mit einem in einer im wesentlichen parallel zur Antriebswelle (10) verlaufenden Lagerachse (24) gelagerten Schaltglied (22), das als Trägheitskörper ausgebildet ist und in einer im wesentlichen rechtwinkelig zur Antriebswelle (10) verlaufenden Ebene um die Lagerachse (24) frei beweglich ist, dadurch gekennzeichnet, daß das Schaltglied (22) ein Massestück (25) aufweist, das sich in Betriebslage der Maschine innerhalb einer die Lagerachse (24) schneidenden fiktiven Zylindermangelfläche um die Spindelachse (23) befindet, und daß das Schaltglied (22) mit seinem Massestück (25) bei ruckhafter Drehung des Gehäuses (1) um die Achse der Werkzeugaufnahme (9) in eine im Antriebsstrang der Handwerkzeugmaschine angeordnete Sicherheitskupplung (12) eingreift und diese nach dem Trägheitsprinzip löst.

2. Handwerkzeugmaschine nach Anspruch 1, dadurch gekennzeichnet, daß das Schaltglied (22) auf einen relativ zu der Spindel (10) drehbaren Ring (18) einwirkt, der mit einer der Kupplungshälften (18) der Sicherheitskupplung (12) verbunden ist.

3. Handwerkzeugmaschine nach einem der vorhergehenden Ansprüche, dadurch gekennzeichnet, daß der Ring (18) über ein Gewinde (16), insbesondere ein Linksgewinde, mit der Spindel (10) verbunden ist.

4. Handwerkzeugmaschine nach einem der vorhergehenden Ansprüche, dadurch gekennzeichnet, daß das Gewinde (16) an seinem der Kupplung (12) fernliegenden Ende (28) ausläuft und der Ring (18) gegenuber der Spindel (10) in dieser Stellung frei drehbar ist.

5. Handwerkzeugmaschine nach einem der vorhergehenden Ansprüche, dadurch gekennzeichnet, daß die zweite Hälfte der Sicherheitskupplung (12) mit einer vom Motor angetriebenen Welle (2) in Verbindung steht und gegenüber der Spindel (10) drehbar ist.

6. Handwerkzeugmaschine nach einem der vorhergehenden Ansprüche, dadurch gekennzeichnet, daß die Sicherheitskupplung (12) von einer auf den Ring (18) einwirkenden Feder (19) in ihrer eingekuppelten Stellung gehalten wird.

7. Handwerkzeugmaschine nach einem der vorhergehenden Ansprüche, dadurch gekennzeichnet, daß das Schaltglied (22) von einem Halteglied (29) in seiner Ruhelage gehalten wird, das eine der Gewichtskraft des Schaltgliedes (22) Haltekraft oder ein entsprechendes Rastmoment ausübt.

8. Handwerkzeugmaschine nach einem der vorhergehenden Ansprüche, dadurch gekennzeichnet, daß der Ring (18) und das Schaltglied (22) einander zugeordnete Reibflächen (20, 26) oder Verzahnungen aufweisen.

9. Handwerkzeugmaschine nach einem der vorhergehenden Ansprüche, dadurch gekennzeichnet, daß das Schaltglied (22) an der Lagerachse (24) seitlich in Richtung der Spindelachse (23) kippbar aufgehängt ist.

## Claims

1. Hand machine tool, particularly a percussion drill, having a casing (1) and a tool mount (9) rotationally driven by means of a spindle (10), and also having a tripping member (22) which is mounted in a mounting axis (24) extending substantially parallel to the drive shaft (10) and which is in the form of an inertia body and is freely movable about the mounting axis (24) in a plane extending substantially at right angles to the drive shaft (10), characterized in that the tripping member (22) has a mass piece (25) which in the operating position of the machine is situated within an imaginary lateral area, intersecting the mounting axis (24), of a cylinder around the spindle axis (23), and in that, on abrupt rotation of the casing (1) about the axis of the tool mount (9), the tripping member (22) with its mass piece (25) engages with and releases on the inertia principle a safety clutch (12) arranged in the drive train of the hand machine tool.

2. Hand machine tool according to Claim 1, characterized in that the tripping member (22) acts on a ring (18) which is rotatable relative to the spindle (10) and which is connected to one of the halves (18) of the safety clutch (12).

3. Hand machine tool according to one of the preceding claims, characterized in that the ring (18) is connected to the spindle (10) via a screw thread (16), particularly a left-handed screw thread.

4. Hand machine tool according to one of the preceding claims, characterized in that the screw thread (16) terminates [sic] at its end (28) remote from the clutch (12) and in that position the ring (18) is freely rotatable relative to the spindle (10).

5. Hand machine tool according to one of the preceding claims, characterized in that the second half of the safety clutch (12) is connected to a shaft (2) driven by the motor and is rotatable relative to the spindle (10).

6. Hand machine tool according to one of the preceding claims, characterized in that the safety clutch (12) is held in its coupled position by a spring (19) acting on the ring (18).

7. Hand machine tool according to one of the preceding claims, characterized in that the tripping member (22) is held in its position of rest by a holding member (29) which exerts a holding force [lacuna] weight of the tripping member (22) or a corresponding retaining moment.

8. Hand machine tool according to one of the preceding claims, characterized in that the ring (18) and the tripping member (22) have mutually associated friction surfaces (20, 26) or toothings.

9. Hand machine tool according to one of the preceding claims, characterized in that the tripping member (22) is suspended on the mounting axis (24) for lateral tilting in the direction of the spindle axis (23).

## Revendications

1. Outil à main, en particulier perceuse à percussion, comprenant un boîtier (1) un porte-outil (9) entraîné en rotation par une broche (10), un organe de déclenchement (22) qui est monté sur un axe porteur (24) sensiblement parallèle à l'axe d'entraînement (10) et qui constitue un corps inertiel qui peut se déplacer dans un plan sensiblement perpendiculaire à l'arbre d'entraînement (10), par rotation autour de l'axe porteur (24), caractérisé en ce que l'organe de déclenchement (22) comporte une masselotte (25) qui se trouve, lorsque la machine est en position de fonctionnement, à l'intérieur d'une surface cylindrique, ayant pour axe, l'axe (23) de la broche et coupant fictivement l'axe porteur (24), une rotation par réaction du boîtier (1) autour de l'axe du porte-outil (9) amenant l'organe de déclenchement (22) en prise avec un accouplement de sécurité (12) monté sur l'arbre de transmission de l'outil et provoquant son ouverture par effet inertiel.

2. Outil à main selon la revendication 2, caractérisé en ce que l'organe de déclenchement (22) agit sur un anneau (18), qui peut tourner par rapport à la broche (10) et qui est relié à une des moitiés de l'accouplement de sécurité.

3. Outil à main selon une des revendications précédentes, caractérisé en ce que l'anneau (18) est relié en particulier à la broche (10) par un filetage (16) à gauche.

4. Outil à main selon une des revendications précédentes, caractérisé en ce que le filetage (16) se trouve en fin de filet à son extrémité la plus éloignée de l'accouplement (12), l'anneau (18) pouvant dans cette position tourner librement par rapport à la broche.

5. Outil à main selon une des revendications précédentes, caractérisé en ce que la seconde moitié de l'accouplement de sécurité (12) est reliée à un arbre (2) entraîné par un moteur et peut tourner par rapport à la broche (10).

6. Outil à main selon une des revendications précédentes, caractérisé en ce que l'accouplement de sécurité (12) est maintenu en position d'accouplement par un ressort (19) agissant sur l'anneau (18).

7. Outil à main selon une des revendications précédentes, caractérisé en ce que l'organe de déclenchement (22) est maintenu en position de repos par un organe de maintien (29) qui fournit une force de maintien compensant le poids de l'organe de déclenchement (22) ou un couple d'arrêt.

8. Outil à main selon une des revendications précédentes, caractérisé en ce que l'anneau (18) et l'organe de déclenchement (22) portent des surfaces de frottement (20, 26) associées ou des dentures.

9. Outil à main selon une des revendications précédentes, caractérisé en ce que l'organe de déclenchement (22) est suspendu à l'axe porteur (24) et peut basculer latéralement en direction de l'axe de broche (23).
